# FASCICULE DE BREVET EUROPEEN

(11) **EP 3 105 752 B1**
(45) Date de publication et mention de la délivrance du brevet: **04.08.2021**
(21) Numéro de dépôt: 14828213.0
(22) Date de dépôt: 12.12.2014
(51) Int. Cl.: B60W 30/14, B60W 50/00, G08G 1/0962

(54) **PROCEDE DE DETERMINATION D'UNE LIMITATION DE VITESSE EN VIGUEUR SUR UNE ROUTE EMPRUNTEE PAR UN VEHICULE AUTOMOBILE**
VERFAHREN ZUR BESTIMMUNG EINER GELTENDEN GESCHWINDIGKEITSBEGRENZUNG AUF EINER STRASSE EINES KRAFTFAHRZEUGS
METHOD FOR DETERMINING A SPEED LIMIT IN FORCE ON A ROAD TAKEN BY A MOTOR VEHICLE

(30) Priorité: 14.02.2014 FR 1451173
(43) Date de publication de la demande: 21.12.2016
(73) Titulaire: Renault S.A.S., 92100 Boulogne-Billancourt (FR)
(72) Inventeur: CHOI, Sungwoo, F-75015 Paris (FR); VALLADARES MONTEIRO, Fernando, 22080-060 IPANEMA / RIO DE JANEIRO (BR)
(86) Numéro de dépôt international: PCT/FR2014/053305
(87) Numéro de publication internationale: WO 2015/121546

(56) Documents cités:
- DE-A1-102012 213 485
- FR-A1- 2 919 098
- FR-A1- 2 968 817
- US-A1- 2007 050 130
- US-A1- 2012 166 033
- None

## Description

### DOMAINE TECHNIQUE AUQUEL SE RAPPORTE L'INVENTION

La présente invention concerne de manière générale la sécurité automobile.

Elle concerne plus particulièrement un procédé de détermination d'une limitation de vitesse en vigueur sur une route empruntée par un véhicule automobile.

Elle concerne également un véhicule automobile équipé :
- d'un système de navigation comprenant un module de géolocalisation et une cartographie des routes dans lequel sont mémorisées des limitations de vitesse associées à une partie au moins desdites routes, et
- d'un système de traitement d'images comprenant un moyen d'acquisition d'images de la route empruntée et un module de traitement apte à identifier sur lesdites images des panneaux de limitation de vitesse disposés au voisinage de la route empruntée.

### ARRIERE-PLAN TECHNOLOGIQUE

On cherche actuellement à offrir aux conducteurs de véhicules automobiles des informations susceptibles de les aider à rouler de manière plus sûre.

Ainsi, il a été développé des systèmes permettant d'afficher dans le véhicule automobile la limitation de vitesse en vigueur sur la route empruntée, ou d'avertir le conducteur lorsqu'il dépasse cette limitation de vitesse.

Un tel système doit donc permettre de détecter automatiquement une limitation de vitesse en vigueur sur une route empruntée par un véhicule.

Une solution bien connue pour cela consiste à exploiter les données mémorisées dans les systèmes de navigation équipant les véhicules automobiles. Ces systèmes associent en effet, pour la majorité d'entre eux, des informations de cartographie avec des informations de limitation de vitesse.

L'inconvénient majeur de cette stratégie est que les informations de limitation de vitesse sont souvent imprécises, voire absentes. Il arrive également que des travaux affectant les limitations de vitesse en vigueur ne soient pas signalés. Enfin, il arrive qu'aucun signal de géolocalisation ne soit disponible, par exemple lors du passage du véhicule automobile sous un long tunnel.

Une autre solution connue consiste à acquérir, à l'aide d'une caméra, des images de la route empruntée et à traiter ces images afin de détecter les panneaux des limitations de vitesse et de reconnaître les caractères inscrits sur ces panneaux.

L'inconvénient majeur de cette stratégie est que les algorithmes de reconnaissance de caractères sur les panneaux de limitation de vitesse ne sont pas toujours fiables, notamment lorsque les routes sont bordées de panneaux publicitaires. En outre, dans des situations particulières (intersections, bifurcations, présence de plusieurs voies de circulation auxquelles sont affectées des limitations de vitesse différentes), de tels systèmes sont incapables de détecter les panneaux de limitation de vitesse effectivement en vigueur. Enfin, en présence d'obstacles devant le véhicule, les panneaux de limitation de vitesse ne sont pas visibles par de tels systèmes.

On connaît alors du document FR2919098 un procédé qui consiste à combiner les deux méthodes précitées.

La solution technique consiste ainsi à déterminer deux limitations de vitesses au moyen de ces deux méthodes, à pondérer la fiabilité des résultats obtenus par ces deux méthodes en fonction de divers paramètres, et à choisir la limitation de vitesse la plus probable.

L'inconvénient majeur de cette solution est que, pour arriver à des résultats probants, le choix de ces paramètres s'avère crucial. Pour déterminer ces paramètres, il est alors nécessaire de faire un grand nombre de tests.

Les tests sont alors longs à mettre en œuvre et ils nécessitent de parcourir un grand nombre de kilomètres. Les résultats des tests sont également très longs et très compliqués à exploiter.

En effet, la pondération des deux méthodes n'étant pas intuitive, il s'avère difficile de comprendre la cause des erreurs et encore plus difficile de les corriger.

### OBJET DE L'INVENTION

Afin de remédier aux inconvénients précités de l'état de la technique, la présente invention propose une nouvelle solution qui se base également sur le système de navigation et sur le système de traitement d'images, mais dont le fonctionnement est plus simple et donc plus aisé à programmer.

Plus particulièrement, on propose selon l'invention un procédé tel que défini dans la revendication 1.

Ainsi, selon l'invention, on considère que la source d'information la plus fiable est la limitation de vitesse affichée sur les panneaux de limitation de vitesse.

Selon l'invention, lorsqu'aucun panneau n'a été détecté depuis une distance seuil, la solution proposée consiste à déterminer si la nature de la route a changé depuis le dernier panneau identifié (par exemple, est-on toujours sur une autoroute ?).

Si la nature de la route n'a pas changé, on considère que la limitation de vitesse en vigueur est toujours celle lue sur le dernier panneau de limitation de vitesse rencontré.

En revanche, si la nature de la route a changé, on choisit de considérer la limitation de vitesse mémorisée dans le système de navigation.

Pour optimiser le fonctionnement de ce procédé, le seul paramètre à régler sera donc le seuil de distance (au-delà duquel on recherche si la nature de la route a changé). Ce seuil pourra être adapté en fonction des conditions (il pourra ainsi être choisi plus grand lorsque le véhicule se trouvera sur une autoroute).

D'autres caractéristiques avantageuses et non limitatives du procédé conforme à l'invention sont les suivantes :
- à l'étape c), si les première et seconde valeurs dudit paramètre sont identiques, la limitation de vitesse considérée est celle lue sur le dernier panneau de limitation de vitesse identifié ;

L'invention propose également un véhicule automobile tel que défini dans la revendication 3.

Préférentiellement, le système de navigation de ce véhicule mémorisera des valeurs du paramètre relatif à la nature d'une partie au moins des routes cartographiées.

Préférentiellement aussi, le moyen d'acquisition d'images équipant ce véhicule sera une caméra.

### DESCRIPTION DETAILLEE D'UN EXEMPLE DE REALISATION

La description qui va suivre en regard du dessin annexé, donné à titre d'exemple non limitatif, fera bien comprendre en quoi consiste l'invention et comment elle peut être réalisée.

Sur les dessins annexés :
- la figure 1 est une vue schématique en perspective d'un véhicule automobile évoluant sur une route, et
- la figure 2 est un graphique illustrant les étapes de mises en œuvre du procédé selon l'invention.

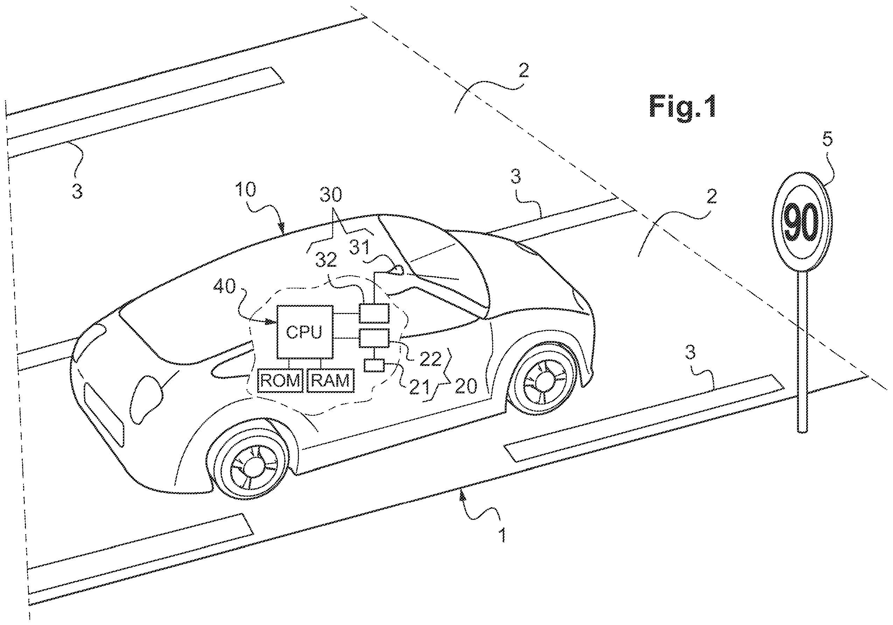

Sur la figure 1, on a représenté un véhicule automobile 10 qui évolue sur une route 1 présentant deux voies de circulation 2. Cette route 1 est revêtue de différents marquages au sol 3, dont des marquages latéraux situés le long de ses deux bords, et des marquages centraux qui séparent les deux voies de circulation 2.

Un panneau de limitation de vitesse 5 est ici représenté sur le bord de la route 1. Il affiche une limitation de vitesse de 90 km/h.

La nature de la route 1 peut être définie par différents paramètres.

A titre d'exemple, on pourra définir la nature de la route 1 par son nombre de voies de circulation 2, par son type (autoroute, nationale, départementale, communale, ...), par la forme de ses marquages au sol, et par l'environnement (urbain, périurbain ou rural).

Le véhicule automobile 10 représenté sur la figure 1 présente une architecture classique, en ce sens qu'il comporte un châssis, des roues et un moteur.

Comme le montre la figure 1, il est toutefois équipé d'un système de navigation 20, d'un système de traitement d'images 30, et d'un calculateur 40.

Le système de navigation 20 comporte un module de géolocalisation 21, ici du type GPS, qui est adapté à capter des signaux en provenance des satellites du système GPS et à fournir la position GPS du véhicule automobile 10.

Ce système de navigation 20 comporte également un module de traitement 22 dans laquelle sont mémorisées une cartographie des routes et des limitations de vitesse associées à une partie au moins des routes cartographiées.

En recevant du module de géolocalisation 21 la position GPS du véhicule automobile 10, le module de traitement 22 est donc en mesure de déterminer la position du véhicule sur une carte. Lorsque la route 1 sur laquelle évolue le véhicule automobile 10 est cartographiée et qu'une limitation de vitesse est associée à cette route, le module de traitement 22 est également en mesure de déterminer une première limitation de vitesse VL1.

Le système de traitement d'images 30 comprend pour sa part un moyen d'acquisition d'images 31 de la route 1 empruntée par le véhicule automobile 10 et un module de traitement 32 apte à identifier sur lesdites images des panneaux de limitation de vitesse 5 disposés au voisinage de la route 1 empruntée.

Ici, le moyen d'acquisition d'images est une caméra 31 qui est fixée de telle manière qu'elle est en mesure d'acquérir des images de la portion de route 1 qui est située à l'avant du véhicule automobile 10. Cette caméra 31 peut ainsi être fixée à l'avant du véhicule automobile 10 (par exemple au niveau des phares avant), ou dans l'habitacle du véhicule automobile 10 (derrière le pare-brise), ou encore sur le toit du véhicule automobile 10 comme cela est représenté sur la figure 1.

Le module de traitement 32 est un logiciel de traitement des images acquises par la caméra 31, qui est adapté à identifier sur ces images le panneau de limitation de vitesse 5, et à lire sur celui-ci la limitation de vitesse qui y est indiquée.

Le système de traitement d'images 30 est alors en mesure de déterminer une seconde limitation de vitesse VL2 lorsqu'un panneau de limitation de vitesse 5 est placé sur le bord de la route 1, qu'il est identifié par le module de traitement 32 et que ce dernier parvient à lire la limitation de vitesse qui y est indiquée.

Le calculateur 40 comportant un processeur (CPU), une mémoire vive (RAM), une mémoire morte (ROM), des convertisseurs analogiques-numériques (A/D), et différentes interfaces d'entrée et de sortie.

Il s'agit ici du calculateur auxiliaire du véhicule automobile, c'est-à-dire du calculateur qui pilote l'ensemble des fonctions du véhicule, à l'exception de celles du moteur.

En variante, il pourrait s'agir du calculateur principal, c'est-à-dire du calculateur qui pilote le moteur.

Encore en variante, il pourrait également s'agir d'un calculateur dédié à la fonction de détermination de la limitation de vitesse en vigueur sur la portion de route 1 sur laquelle évolue le véhicule automobile 10.

Ici, ce calculateur 40 est représenté comme étant distinct du système de navigation 20 et du système de traitement d'images 30. En variante, il pourrait incorporer une partie des fonctionnalités de ces deux systèmes.

Grâce à ses interfaces d'entrée, le calculateur 40 est adapté à recevoir du système de navigation 20 et du système de traitement d'images 30 les première et seconde limitations de vitesse VL1, VL2.

La première limitation de vitesse VL1 étant calculée à intervalles réguliers par le système de navigation 20 et la seconde limitation de vitesse VL2 pouvant changer dès qu'un nouveau panneau de limitation de vitesse 5 est identifié, le calculateur 40 ne mémorise dans sa mémoire vive que les deux limitations de vitesse VL1, VL2 calculées le plus récemment (il écrase les anciennes valeurs mémorisées).

Dans sa mémoire morte, le calculateur 40 mémorise un algorithme de détermination d'une limitation de vitesse en vigueur sur la route 1 empruntée par le véhicule automobile 10. C'est cet algorithme qui fait plus précisément l'objet de la présente invention. Il consiste plus particulièrement à déterminer une limitation de vitesse finale VL en fonction des deux limitations de vitesse VL1, VL2.

Enfin, grâce à ses interfaces de sortie, le calculateur 40 est adapté à transmettre cette limitation de vitesse finale VL à un quelconque dispositif susceptible d'indiquer au conducteur la limitation de vitesse finale VL ou d'émettre un signal d'alerte lorsque la vitesse du véhicule automobile 10 dépasse cette limitation de vitesse finale VL.

Selon une caractéristique particulièrement avantageuse de l'invention, l'algorithme mémorisé dans la mémoire morte du calculateur 40 est adapté à :
a) acquérir, lorsqu'un panneau de limitation de vitesse 5 est identifié par le système de traitement d'images 30, une première valeur Z1 d'un paramètre relatif à la nature de la route 1 empruntée,
b) acquérir, lorsque la distance parcourue par le véhicule automobile 10 depuis que le dernier panneau de limitation de vitesse 5 a été identifié dépasse un seuil de distance Ds prédéterminé, une seconde valeur Z2 du paramètre relatif à la nature de la route 1 empruntée, puis
c) si les première et seconde valeurs Z1 et Z2 dudit paramètre sont différentes, lire dans le système de navigation 20 la limitation de vitesse associée à la route 1 empruntée.

Cet algorithme fonctionne plus précisément de la manière décrite dans la suite de cet exposé.

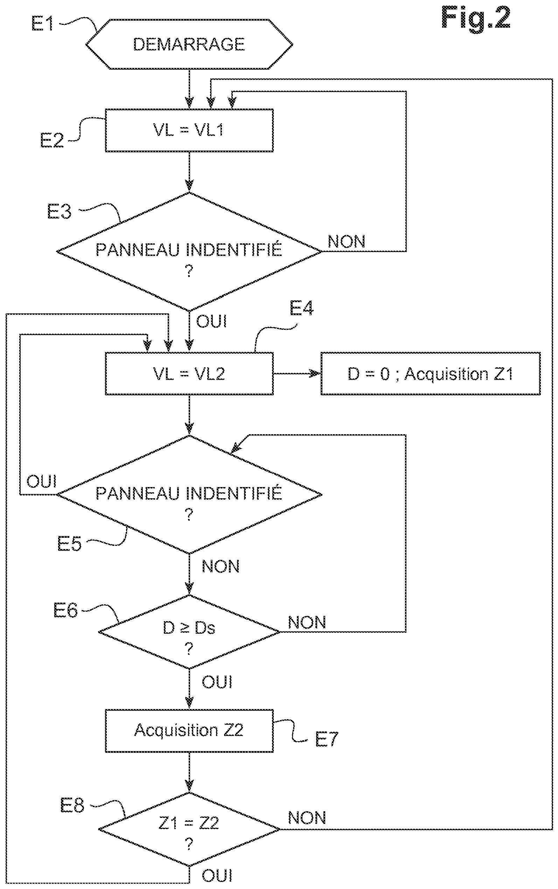

Comme le montre la figure 2, l'algorithme peut être décomposé en plusieurs étapes E1 à E8, qui sont itérées les unes à la suite des autres à chaque pas de temps (par exemple tous les dixièmes de seconde).

Au démarrage du véhicule (étape E1), puisqu'aucun panneau de limitation de vitesse 5 n'a encore été identifié, le calculateur 40 mémorise dans sa mémoire vive uniquement la première limitation de vitesse VL1 (déterminée par le système de navigation 20). Il ne mémorise par encore de seconde limitation de vitesse VL2.

Le calculateur 40 considère alors que la limitation de vitesse finale VL est égale à cette première limitation de vitesse VL1 (étape E2).

Le calculateur 40 va alors surveiller si un nouveau panneau de limitation de vitesse 5 est identifié par le système de traitement d'images 30 (étape E3).

Tant qu'aucun panneau de limitation de vitesse 5 n'est identifié, le calculateur 40 considère que la limitation de vitesse finale VL est égale à la première limitation de vitesse VL1 mémorisée dans sa mémoire vive (on rappelle que cette première limitation de vitesse VL1 est régulièrement mise à jour dans la mémoire vive).

Puis dès que le système de traitement d'images 30 identifie un panneau de limitation de vitesse 5 et qu'il enregistre dans la mémoire vive du calculateur 40 une seconde limitation de vitesse VL2, le calculateur 40 considère que la limitation de vitesse finale VL est égale à cette seconde limitation de vitesse VL2 (étape E4).

Au moment où le panneau de limitation de vitesse 5 est identifié, le calculateur 40 détermine la première valeur Z1 de l'un au moins des paramètres caractérisant la nature de la route 1 empruntée. Comme cela sera expliqué en détail dans la suite de cet exposé, il pourrait par exemple s'agir du nombre de voies de circulation 2.

Le calculateur affecte par ailleurs la valeur 0 à un compteur de distance D parcourue par le véhicule automobile 10. Ce compteur de distance D va alors s'incrémenter en fonction de la distance parcourue par le véhicule automobile 10 depuis cette remise à zéro.

Puis, le calculateur 40 considère que la limitation de vitesse finale VL reste égale à cette seconde limitation de vitesse VL2 tant qu'aucun nouveau panneau de limitation de vitesse 5 n'est identifié par le système de traitement d'images 30, et pour autant que la distance parcourue par le véhicule automobile 10 depuis que le dernier panneau de limitation de vitesse 5 a été identifié ne dépasse le seuil de distance Ds prédéterminé.

En pratique, le calculateur 40 surveille à nouveau si un panneau de limitation de vitesse 5 est identifié par le système de traitement d'images 30 (étape E5).

Si le système de traitement d'images 30 identifie un nouveau panneau de limitation de vitesse 5, l'algorithme revient à l'étape E4.

Au contraire, si aucun nouveau panneau de limitation de vitesse 5 n'est identifié, le calculateur compare la valeur du compteur de distance D avec le seuil de distance Ds (étape E6).

Si la valeur du compteur de distance D est inférieure au seuil de distance Ds, l'algorithme revient à l'étape E5.

Au contraire, si la valeur du compteur de distance D est supérieure ou égale au seuil de distance Ds, le calculateur 40 acquiert la seconde valeur Z2 du (ou des) paramètre caractérisant la nature de la route 1 empruntée (étape E7).

Puis, il compare les première et seconde valeurs Z1, Z2 de chaque paramètre (étape E8).

Ainsi, le calculateur 40 va pouvoir déterminer si la nature de la route a changé depuis que le dernier panneau de limitation de vitesse 5 a été identifié. Si la nature de la route a changé, le calculateur 40 se fiera alors à la première limitation de vitesse VL1. En revanche, si elle n'a pas changé, il se fiera davantage à la seconde limitation de vitesse VL2 lue sur le denier panneau de limitation de vitesse identifié.

En pratique, si les première et seconde valeurs Z1, Z2 sont égales (la nature de la route n'a pas changé), l'algorithme revient à l'étape E4 (le compteur de distance D est alors remis à zéro).

Au contraire, si les première et seconde valeurs Z1, Z2 sont différentes, l'algorithme revient à l'étape E2.

Comme cela a été mentionné supra, pour déterminer si la nature de la route a changé, le calculateur 40 pourra considérer un seul paramètre ou bien plusieurs.

A titre de premier exemple, aux étapes E4 et E7, le calculateur 40 pourra déterminer (à l'aide du système de traitement d'images 30) le nombre de voies de circulation 2 de la route 1 empruntée. Il pourra alors considérer que la nature de la route 1 a changé si ce nombre de voies a changé entre les étapes E4 et E7.

A titre de second exemple, aux étapes E4 et E7, le calculateur 40 pourra lire dans le système de navigation 20 le type de route 1 (autoroute, nationale, départementale, communale, ...) et, à l'étape E8, il pourra considérer que la nature de la route 1 a changé si le type de route a changé.

A titre de troisième exemple, aux étapes E4 et E7, le calculateur 40 pourra lire dans le système de navigation 20 le type de route 1 (autoroute, nationale, départementale, communale, ...) et le type d'environnement (urbain, périurbain ou rural) et, à l'étape E8, il pourra considérer que la nature de la route 1 a changé si le type de route et/ou le type d'environnement a changé.

A titre de quatrième exemple, aux étapes E4 et E7, le calculateur 40 pourra déterminer, à l'aide du système de traitement d'images 30, la forme des marquages au sol 3 latéraux, et, à l'étape E8, il pourra considérer que la nature de la route 1 a changé si la forme de ces marquages a changé.

A titre de cinquième exemple, aux étapes E4 et E7, le calculateur 40 pourra lire dans le système de navigation 20 le type de route 1 (autoroute, nationale, départementale, communale, ...) et déterminer, à l'aide du système de traitement d'images 30, la forme des marquages au sol 3 latéraux, puis, à l'étape E8, il pourra considérer que la nature de la route 1 a changé si le type de route et/ou la forme des marquages a changé.

Bien entendu, ces cinq exemples ne sont pas limitatifs et illustrent seulement diverses manières de procéder.

S'agissant du seuil de distance Ds au-delà duquel on détermine si la nature de la route 1 a changé, il sera prédéterminé et mémorisé dans la mémoire morte du calculateur 40.

On pourra prévoir d'y mémoriser une seule valeur de seuil de distance Ds, qui sera valable quelle que soit la nature de la route 1.

Toutefois, préférentiellement, on y mémorisera plusieurs valeurs de seuil de distance Ds qui seront valables selon la nature de la route 1 empruntée.

Ainsi, à titre de premier exemple, on pourra prévoir que ce seuil de distance Ds soit égal à :
- 5 kilomètres si la route 1 est une autoroute,
- 3 kilomètres si la route 1 est une nationale,
- 2 kilomètres si la route 1 est une départementale,
- 500 mètres si la route 1 est une communale.

A titre de second exemple, on pourra prévoir que ce seuil de distance Ds soit égal à :
- 5 kilomètres dans un environnement exclusivement rural,
- 2 kilomètres dans un environnement périurbain (ou périurbain et rural),
- 500 mètres dans un environnement urbain (ou urbain et périurbain).

## Revendications

1. Procédé de détermination d'une limitation de vitesse (VL) en vigueur sur une route (1) empruntée par un véhicule automobile (10), ledit véhicule automobile (10) étant équipé :
- d'un système de navigation (20) comprenant un module de géolocalisation (21) et une cartographie des routes dans laquelle sont mémorisées des limitations de vitesse (VL1) associées à une partie au moins desdites routes, et
- d'un système de traitement d'images (30) comprenant un moyen d'acquisition d'images (31) de la route empruntée et un module de traitement (32) apte à identifier sur lesdites images des panneaux de limitation de vitesse (5) disposés au voisinage de la route (1) empruntée,
**caractérisé en ce qu'**il comprend des étapes, mises en œuvre par un calculateur (40), consistant à :
a) acquérir, au niveau de chaque panneau de limitation de vitesse (5) identifié, une première valeur (Z1) d'un paramètre relatif à la nature de la route (1) empruntée, et préalablement à l'étape a), si aucun panneau de limitation de vitesse n'a été identifié, on lit dans le système de navigation (20) la limitation de vitesse associée à la route (1) empruntée,
ledit paramètre comprenant l'une au moins des données suivantes :
- le nombre de voies de circulation (2) sur la route (1),
- le type d'environnement urbain, périurbain ou rural,
- le type de route,
- la forme des marquages au sol (3),
b) acquérir, lorsque la distance (D) parcourue par le véhicule automobile (10) depuis que le dernier panneau de limitation de vitesse (5) a été identifié dépasse un seuil prédéterminé (Ds), une seconde valeur (Z2) du paramètre relatif à la nature de la route (1) empruntée,
c) si les première et seconde valeurs (Z1, Z2) dudit paramètre sont différentes, lire dans le système de navigation (20) la limitation de vitesse associée à la route (1) empruntée,
dans lequel, entre les étapes a) et b), la limitation de vitesse (VL) considérée est celle lue sur le dernier panneau de limitation de vitesse (5) identifié,
dans lequel, aux étapes a) et b), soit les première et seconde valeurs dudit paramètre sont déterminées à l'aide du système de traitement d'images (30), soit les première et seconde valeurs dudit paramètre sont lues dans le système de navigation (20), le système de navigation (20) mémorisant des valeurs du paramètre relatif à la nature d'une partie au moins des routes cartographiées.

2. Procédé de détermination selon la revendication précédente, dans lequel, à l'étape c), si les première et seconde valeurs dudit paramètre sont identiques, la limitation de vitesse considérée est celle lue sur le dernier panneau de limitation de vitesse (5) identifié.

3. Véhicule automobile comprenant :
- un système de navigation (20) comprenant un module de géolocalisation (21) et une cartographie des routes dans laquelle sont mémorisées des limitations de vitesse associées à une partie au moins desdites routes, et
- un système de traitement d'images (30) comprenant un moyen d'acquisition d'images (31) de la route empruntée et un module de traitement (32) apte à identifier et à interpréter des panneaux de limitation de vitesse (5) disposés au voisinage de la route (1) empruntée,
**caractérisé en ce qu'**il comporte un calculateur (40) qui est adapté à mettre en œuvre un procédé de détermination d'une limitation de vitesse en vigueur sur une route (1) selon l'une des revendications précédentes.

4. Véhicule automobile selon la revendication précédente, dans lequel le système de navigation (20) mémorise des valeurs du paramètre relatif à la nature d'une partie au moins des routes cartographiées.

5. Véhicule automobile selon l'une des deux revendications précédentes, dans lequel le moyen d'acquisition d'images (31) est une caméra.

## Patentansprüche

1. Verfahren zur Bestimmung einer auf einer von einem Kraftfahrzeug (10) benutzten Straße (1) geltenden Geschwindigkeitsbegrenzung (VL), wobei das Kraftfahrzeug (10) ausgestattet ist mit:
- einem Navigationssystem (20), das ein Geolokalisierungsmodul (21) und eine Kartierung der Straßen enthält, in der Geschwindigkeitsbegrenzungen (VL1) gespeichert sind, die mindestens einem Teil der Straßen zugeordnet sind, und
- einem Bildverarbeitungssystem (30), das eine Bilderfassungseinrichtung (31) der benutzten Straße und ein Verarbeitungsmodul (32) enthält, das auf den Bildern Geschwindigkeitsbegrenzungsschilder (5) erkennen kann, die in der Nähe der benutzten Straße (1) angeordnet sind,
**dadurch gekennzeichnet, dass** es von einem Rechner (40) durchgeführte Schritte enthält, die darin bestehen:
a) im Bereich jedes erkannten Geschwindigkeitsbegrenzungsschilds (5) einen ersten Wert (Z1) eines Parameters bezüglich der Art der benutzten Straße (1) zu erfassen, und vor dem Schritt a), wenn kein Geschwindigkeitsbegrenzungsschild erkannt wurde, im Navigationssystem (20) die der benutzten Straße (1) zugeordnete Geschwindigkeitsbegrenzung abzulesen, wobei der Parameter mindestens einen der folgenden Datenwerte enthält:
- die Anzahl von Fahrbahnen (2) auf der Straße (1),
- den Umgebungstyp, städtisch, stadtnah oder ländlich,
- den Straßentyp,
- die Form der Bodenmarkierungen (3),
b) wenn die vom Kraftfahrzeug (10) seit dem Erkennen des letzten Geschwindigkeitsbegrenzungsschilds (5) zurückgelegte Strecke (D) eine vorbestimmte Schwelle (Ds) überschreitet, einen zweiten Wert (Z2) des Parameters bezüglich der Art der benutzten Straße (1) zu erfassen,
c) wenn die ersten und zweiten Werte (Z1, Z2) des Parameters sich unterscheiden, im Navigationssystem (20) die der benutzten Straße (1) zugeordnete Geschwindigkeitsbegrenzung abzulesen,
wobei zwischen den Schritten a) und b) die berücksichtigte Geschwindigkeitsbegrenzung (VL) diejenige ist, die auf dem letzten erkannten Geschwindigkeitsbegrenzungsschild (5) gelesen wurde, wobei in den Schritten a) und b) entweder die ersten und zweiten Werte des Parameters mit Hilfe des Bildverarbeitungssystems (30) bestimmt werden, oder die ersten und zweiten Werte des Parameters im Navigationssystem (20) abgelesen werden, wobei das Navigationssystem (20) Werte des Parameters bezüglich der Art mindestens eines Teils der kartierten Straßen speichert.

2. Bestimmungsverfahren nach dem vorhergehenden Anspruch, wobei im Schritt c), wenn die ersten und zweiten Werte des Parameters gleich sind, die berücksichtigte Geschwindigkeitsbegrenzung diejenige ist, die auf dem letzten erkannten Geschwindigkeitsbegrenzungsschild (5) gelesen wurde.

3. Kraftfahrzeug, das enthält:
- ein Navigationssystem (20), das ein Geolokalisierungsmodul (21) und eine Kartierung der Straßen enthält, in der Geschwindigkeitsbegrenzungen gespeichert sind, die mindestens einem Teil der Straßen zugeordnet sind, und
- ein Bildverarbeitungssystem (30), das eine Bilderfassungseinrichtung (31) der benutzten Straße und ein Verarbeitungsmodul (32) enthält, das Geschwindigkeitsbegrenzungsschilder (5) erkennen und interpretieren kann, die in der Nähe der benutzten Straße (1) angeordnet sind,
**dadurch gekennzeichnet, dass** es einen Rechner (40) aufweist, der geeignet ist, ein Bestimmungsverfahren einer geltenden Geschwindigkeitsbegrenzung auf einer Straße (1) nach einem der vorhergehenden Ansprüche durchzuführen.

4. Kraftfahrzeug nach dem vorhergehenden Anspruch, wobei das Navigationssystem (20) Werte des Parameters bezüglich der Art mindestens eines Teils der kartierten Straßen speichert.

5. Kraftfahrzeug nach einem der zwei vorhergehenden Ansprüche, wobei die Bilderfassungseinrichtung (31) eine Kamera ist.

## Claims

1. Method for determining a speed limit (VL) in force on a road (1) taken by a motor vehicle (10), said motor vehicle (10) being equipped:
- with a navigation system (20) comprising a geolocation module (21) and a road map in which speed limits (VL1) associated with at least some of the roads are stored, and
- with an image processing system (30) comprising a means (31) for acquiring images of the road taken and a processing module (32) able to identify, in said images, speed limit signs (5) located close to the road (1) taken, **characterized in that** it comprises steps, implemented by a computer (40), consisting in:
a) acquiring, at each speed limit sign (5) identified, a first value (Z1) of a parameter relating to the nature of the road (1) taken, and prior to step a), if no speed limit sign has been identified, the speed limit associated with the road (1) taken is read in the navigation system (20),
said parameter comprising at least one of the following data:
- the number of traffic lanes (2) on the road (1),
- the type of environment - urban, peri-urban or rural,
- the type of road,
- the shape of the markings on the ground (3).
b) acquiring, when the distance (D) travelled by the motor vehicle (10) since the last speed limit sign (5) was identified exceeds a predetermined threshold (Ds), a second value (Z2) of the parameter relating to the nature of the road (1) taken,
c) if the first and second values (Z1, Z2) of said parameter are different, reading, in the navigation system (20), the speed limit associated with the road (1) taken,
in which, between steps a) and b), the speed limit (VL) considered is that read on the last speed limit sign (5) identified,
in which, in steps a) and b), either the first and second values of said parameter are determined using the image processing system (30), or the first and second values of said parameter are read in the navigation system (20), the navigation system (20) memorizing values of the parameter relating to the nature of at least some of the mapped roads.

2. Determining method according to the preceding claim, in which, in step c), if the first and second values of said parameter are identical, the speed limit considered is that read on the last speed limit sign (5) identified.

3. Motor vehicle comprising:
- a navigation system (20) comprising a geolocation module (21) and a road map in which speed limits associated with at least some of the roads are stored, and
- an image processing system (30) comprising a means (31) for acquiring images of the road taken and a processing module (32) able to identify and interpret speed limit signs (5) located close to the road (1) taken,
**characterized in that** it comprises a computer (40) which is designed to implement a method for determining a speed limit in force on a road (1) according to one of the preceding claims.

4. Motor vehicle according to the preceding claim, in which the navigation system (20) stores values of the parameter relating to the nature of at least some of the mapped roads.

5. Motor vehicle according to one of the two preceding claims, in which the image acquisition means (31) is a camera.
